# EUROPÄISCHE PATENTSCHRIFT

(11) **EP 1 593 578 B1**
(45) Veröffentlichungstag und Bekanntmachung des Hinweises auf die Patenterteilung: **08.10.2008**
(21) Anmeldenummer: 05003557.5
(22) Anmeldetag: 18.02.2005
(51) Int. Cl.: B62D 1/11

(54) **Deformierbares Kraftfahrzeug-Lenkrad**
Yieldable automotive steering wheel
Volant déformable pour véhicule automobile

(30) Priorität: 07.05.2004 DE 102004022635
(43) Veröffentlichungstag der Anmeldung: 09.11.2005
(73) Patentinhaber: Dr. Ing. h.c. F. Porsche Aktiengesellschaft, 70435 Stuttgart (DE)
(72) Erfinder: Rosman, Bojan, 70569 Stuttgart (DE); Schwabe, Bernd, 70191 Stuttgart (DE); Rost, Thomas, 75177 Pforzheim (DE)

(56) Entgegenhaltungen:
- EP-A1- 0 488 618
- JP-A- 7 323 845
- US-A- 5 243 877
- US-A- 5 868 041

## Beschreibung

Die Erfindung bezieht sich auf ein Lenkrad für ein Kraftfahrzeug nach dem Oberbegriff des Patentanspruchs 1.

Es ist ein Lenkrad der eingangs genannten Gattung bekannt, FR 2 353 425, das zur Verbesserung des Insassensicherheit eines Kraftfahrzeugs im Bereich von Speichen und einem einen Lenkradkranz bildenden Metallring mit Deformationsbereichen versehen ist. Die Deformationsbereiche werden durch. Querschnitsredukbonen der Speichen und des Metallrings gebildet. Die Speichen und der Metallring bestehen aus gleichem Werkstoff und weisen einen identischen Querschnitt auf.

In der DE 37 02 847 C2 wird ein Lenkrad mit einem Lenkradkern behandelt, der einen Kranzkern und Speichen umfasst, die aus einer Leichtmetallgierung hergestellt sind. An den vom Kranzkern abgekehrten Seiten der Speichen ist das Lenkrad unter Zwischenschaltung eines Verbindungsteils an einer Nabe befestige. Das Verbindungsteil verformt sich dann plastisch, wenn auf den Lenkradkern eine definierte Stoßbelastung ausgeübt wird.

Die EP 0 488 618 A1 zeigt eine gattungemäße Lenkradvorrichtung mit einem Lenkradring und mit einer Vielzahl von Speichen, wobei der Lenkradring eine untere Hälfte relativ geringer Steifigkeit und eine obere Hälfte relativ hoher Steifigkeit besitzt, so dass die untere Hälfte des Lenkradrings nach vorn geschoben wird, wenn auf einen unteren Abschnitt der Lenkradvorrichtung eine nach vorn gerichtete Kraft wirkt, die größer ist als ein vorbestimmter Wert.

Aus der US 5,243,877 A ist ein Lenkrad für ein Kraftfahrzeug bekannt, welches einen Lenkradkranz aufweist, der von zwei Armen unterstützt wird, wobei der Lenkradkranz mit dem Ziel einer Gewichtsreduktion dort einen verringerten Durchmesser aufweist, wo er den Verbindungsbereich mit den Unterstützungsarmen verlässt.

Es ist Aufgabe der Erfindung ein Lenkrad für ein Kraftfahrzeug zu schaffen, das bei hoher Festigkeit dem Fahrer im falle havariebedingter Stoßbelastung durch Deformationsbereiche weit reichenden Schutz bietet. Dabei sollten aber auch am Lenkrad Vorkehrungen getroffen werden, die den Bedienungskomfort des Lenkrades verbessern.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die ausschließlich in den Rohrring eingearbeiteten Deformationsbereiche auf einfache Weise realisiert werden können und bei durch einen Unfall ausgelöster Stoßbelastungen gut wirksam sind und das Verletzungsrisiko für den Fahrer des Kraftfahrzeugs zumindest reduzieren. Dies wird noch durch die besondere Anordnung und Dimensionierung der Deformationsbereiche am Rohrring unterstützt. Dabei trägt das Stahlrohr, das in die Leichtmetallstruktur der Speichen integriert ist, zur Erhöhung der Lenkradmassenträgheit bei, die einen spürbar positiven Einfluss auf den Lenkkomfort hat.

In der Zeichnung wird ein Ausführungsbeispiel der Erfindung gezeigt, das nachstehend näher erläutert wird.

Es zeigen
- Fig. 1: eine Ansicht von oben auf ein Lenkrad nach der Erfindung,
- Fig. 2: einen Schnitt nach der Linie II-II der Fig.1,
- Fig. 3: einen Schnitt nach der Linie III-III der Fig.1.

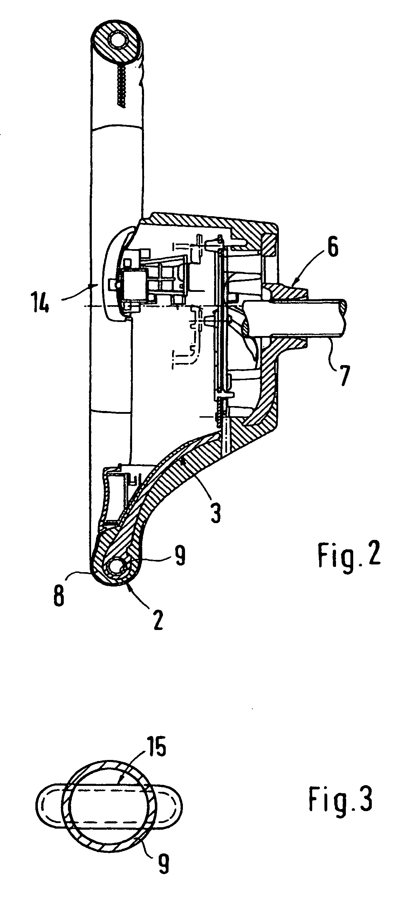

Ein Lenkrad 1 für ein nicht näher dargestelltes Kraftfahrzeug umfasst ein Ringelement 2 und Speichen 3, 4 und 5. Die Speichen 3, 4 und 5 sind unter Vermittlung einer Nabe 6 - Fig. 2 - mit einer Lenksäule 7 verbunden. Eine Schaumstoffverkleidung 8 umgibt das Ringelement 2 und die Speichen 3, 4 und 5.

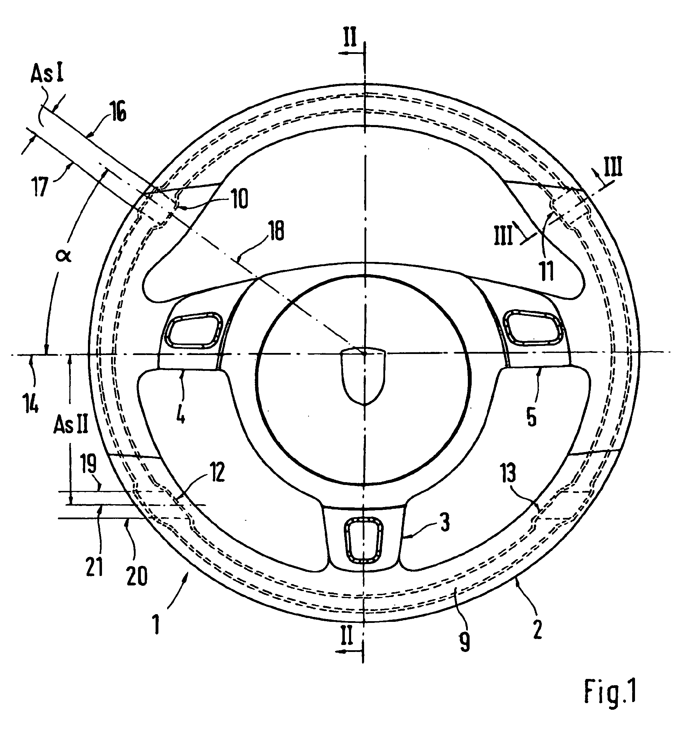

Das Ringelement 2 weist einen Rohrring 9 auf, der durch ein Stahlrohr gebildet wird. Die Speichen 3, 4 und 5 bestehen aus einer Leichtmetalllegierung - Magnesium - und sind bereichsweise als Umguss des Rohrrings 9 ausgebildet, wobei die Speiche 3 in einer Grundstellung des Lenkrads 1 aufrecht bzw. senkrecht verläuft. Dagegen sind die Speichen 4 und 5 in besagter Stellung in etwa horizontal ausgerichtet. Darüber hinaus ist der Rohrring 9 mit Deformationsbereichen 10, 11 und 12, 13 versehen, die bei definierter bspw. durch eine Havarie hervorgerufenen Stoßbelastung wirksam werden. Beiderseits einer horizontalen Lenkradebene 14 sind am Rohrring 9 erste Deformationsbereiche 10 und 11 sowie zweite Deformationsbereiche 12 und 13 vorgesehen. Jeder Deformationsbereich z.B. 10 wird durch eine Widerstandsmoment reduzierende Querschnittsabflachung 15 des Rohrrings 9 gebildet. Fig. 1 zeigt, dass die ersten Deformationsbereiche 10 und 11 von radialen Übergangsebenen 16 und 17 begrenzt werden, die zwischen Querschnittsabflachung 15 und kreisförmigem Querschnitt des Rohrrings 9 - Fig. 3 - verlaufen. Dabei beträgt der Abstand Asl zwischen den Übergangsebenen 16 und 17 der ersten Deformationsbereiche 10 und 11 bspw. 15 und 21 mm. Eine sich symmetrisch zwischen den Übergangsebenen 16 und 17 erstreckende radiale Mittelebene 18 verläuft im Winkel α von 33° bis 37° zu der horizontalen Lenkradebene 14.

Schließlich wird jeder zweite Deformationsbereich bspw. 12 von horizontalen Übergangsebenen 19 und 20 begrenzt, und der Abstand Asll einer symmetrisch zwischen den Übergangsebenen 19 und 20 verlaufenden horizontalen Mittelebene 21 und der horizontalen Lenkradebene 14 beträgt zwischen 105 und 110 mm.

## Patentansprüche

1. Lenkrad für ein Kraftfahrzeug, das Deformationsbereiche und ein Ringelement mit Speichen umfasst, die unter Vermittlung einer Nabe mit einer Lenksäule verbunden sind, **dadurch gekennzeichnet, dass** das einen Rohrring (9) umfassende Ringelement (2) des Lenkrads (1) durch ein Stahlrohr dargestellt ist und die Deformationsbereiche (10,11,12 und 13) ausschließlich am Rohrring (9) vorgesehen sind, wobei die aus einer Leichtmetalllegierung bestehenden Speichen (3, 4 und 5) bereichsweise als Umguss des Rohrrings (9) ausgebildet sind, wobei beiderseits einer in Grundstellung des Lenkrads (1) horizontalen Lenkradebene (14) des Lenkrads (1) erste Deformationsbereiche (10 und 11) und zweite Deformationsbereiche (12 und 13) am Rohrring (9) vorgesehen sind, wobei die Deformationsbereiche (10, 11, 12 und 13) durch das Widerstandsmoment reduzierende Querschnittsabflachungen (15) des Rohrrings (9) gebildet werden, wobei der Rohrring (9) zwischen den Deformationsbereichen (10, 11, 12, 13) einen gleichen, kreisförmigen Querschnitt aufweist.

2. Lenkrad nach Anspruch 1, **dadurch gekennzeichnet, dass** die ersten Deformationsbereiche (10 und 11) von beabstandeten mit Bezug auf das Lenkrad (1) radialen Übergangsebenen (16 und 17) begrenzt werden.

3. Lenkrad nach den Ansprüchen 1 und 2, **dadurch gekennzeichnet, dass** die zweiten Deformationsbereiche (12 und 13) von beabstandeten, in Grundstellung des Lenkrads (1) horizontalen Übergangsebenen (19 und 20) begrenzt werden.

4. Lenkrad nach den Ansprüchen 2 und 3, **dadurch gekennzeichnet, dass** der Abstand (Asl) zwischen den Übergangsebenen (16, 17 und 19, 20) der Deformationsbereiche (10,11 und 12,13) zwischen 15 und 21 mm beträgt.

5. Lenkrad nach einem oder mehreren der vorangehenden Ansprüche, **dadurch gekennzeichnet, dass** eine sich zwischen den mit Bezug auf das Lenkrad (1) radialen Ebenen (16 und 17) der ersten Deformationsbereiche (10 und 11) erstreckende mit Bezug auf das Lenkrad (1) radiale Mittelebene (18) im Winkel (α) von 33° bis 37° zur in Grundstellung des Lenkrads (1) horizontalen Lenkradebene (14) verläuft.

6. Lenkrad nach einem oder mehreren der vorangehenden Ansprüche, **dadurch gekennzeichnet, dass** der Abstand (Asll) einer sich zwischen den in Grundstellung des Lenkrads (1) horizontalen Übergangsebenen (19 und 20) der zweiten Deformationsbereiche (12 und 13) erstreckenden mit Bezug auf das Lenkrad (1) horizontalen Mittelebene (21) und der mit Bezug auf das Lenkrad (1) horizontalen Lenkradebene (14) zwischen 105 und 110 mm beträgt.

## Claims

1. Steering wheel for a motor vehicle, which steering wheel comprises deformation regions and an annular element having spokes which are connected to a steering column via a hub, **characterized in that** the annular element (2) of the steering wheel (1), which annular element (2) comprises a tubular ring (9), is represented by a steel tube and the deformation regions (10, 11, 12 and 13) are provided exclusively on the tubular ring (9), the spokes (3, 4 and 5) which consist of a lightweight metal alloy being configured in regions as parts which are cast around the tubular ring (9), first deformation regions (10 and 11) and second deformation regions (12 and 13) being provided on the tubular ring (9) on both sides of a steering-wheel plane (14) of the steering wheel (1), which steering-wheel plane (14) is horizontal in a basic position of the steering wheel (1), the deformation regions (10, 11, 12 and 13) being formed by cross-sectional flattened portions (15) of the tubular ring (9) which reduce the section modulus, the tubular ring (9) having a uniform, circular cross section between the deformation regions (10, 11, 12, 13).

2. Steering wheel according to Claim 1, **characterized in that** the first deformation regions (10 and 11) are delimited by transition planes (16 and 17) which are spaced apart and radial in relation to the steering wheel (1).

3. Steering wheel according to Claims 1 and 2, **characterized in that** the second deformation regions (12 and 13) are delimited by transition planes (19 and 20) which are spaced apart and horizontal in the basic position of the steering wheel (1).

4. Steering wheel according to Claims 2 and 3, **characterized in that** the spacing (Asl) between the transition planes (16, 17 and 19, 20) of the deformation regions (10, 11 and 12, 13) is between 15 and 21 mm.

5. Steering wheel according to one or more of the preceding claims, **characterized in that** a centre plane (18) which is radial in relation to the steering wheel (1) and extends between those planes (16 and 17) of the first deformation regions (10 and 11) which are radial in relation to the steering wheel (1) extends at an angle (α) of from 33° to 37° with respect to the steering-wheel plane (14) which is horizontal in the basic position of the steering wheel (1).

6. Steering wheel according to one or more of the preceding claims, **characterized in that** the spacing (Asll) of a centre plane (21) which is horizontal in relation to the steering wheel (1) and extends between those transition planes (19 and 20) of the second deformation regions (12 and 13) which are horizontal in the basic position of the steering wheel (1) and of the steering-wheel plane (14) which is horizontal in relation to the steering wheel (1) is between 105 and 110 mm.

## Revendications

1. Volant pour un véhicule automobile qui comprend des zones de déformation et un élément annulaire avec des rayons reliés à une colonne de direction par l'intermédiaire d'un moyeu, **caractérisé en ce que** l'élément annulaire (2) du volant (1) comprenant une bague tubulaire (9) est représenté par un tube en acier et **en ce que** les zones de déformation (10, 11, 12 et 13) sont prévues exclusivement au niveau de la bague tubulaire (9), les rayons (3, 4 et 5) composés d'un alliage de métaux légers sont réalisés par zones comme un coulage périphérique de la bague tubulaire (9), des premières zones de déformation (10 et 11) et des secondes zones de déformation (12 et 13) étant prévues au niveau de la bague tubulaire (9) des deux côtés d'un plan de volant (14) horizontal du volant (1) dans la position de base du volant (1), les zones de déformation (10, 11, 12 et 13) étant formées par les méplats transversaux (15) de la bague tubulaire (9) réduisant le couple de résistance, la bague tubulaire (9) comportant entre les zones de déformation (10, 11, 12, 13) une section circulaire égale.

2. Volant selon la revendication 1, **caractérisé en ce que** les premières zones de déformation (10 et 11) sont délimitées par les plans de transition (16 et 17) radiaux écartés par rapport au volant (1).

3. Volant selon l'une quelconque des revendications 1 et 2, **caractérisé en ce que** les secondes zones de déformation (12 et 13) sont délimitées par les plans de transition (19 et 20) écartés, horizontaux dans la position de base du volant (1).

4. Volant selon l'une quelconque des revendications 2 et 3, **caractérisé en ce que** l'écartement (AsI) entre les plans de transition (16, 17 et 19, 20) des zones de déformation (10, 11 et 12, 13) se situe entre 15 et 21 mm.

5. Volant selon l'une quelconque des revendications précédentes ou selon plusieurs revendications précédentes, **caractérisé en ce qu'**un plan central (18) radial s'étendant entre les plans radiaux (16 et 17) des premières zones de déformation (10 et 11), par rapport au volant (1), présente un angle (α) de 33° à 37° par rapport au plan de volant (14) dans la position de base du volant (1).

6. Volant selon l'une quelconque des revendications précédentes ou selon plusieurs revendications précédentes, **caractérisé en ce que** l'écartement (AsII) d'un plan central (21) horizontal s'étendant entre les plans de transition (19 et 20) horizontaux des secondes zones de déformation (12 et 13) dans la position de base du volant (1), par rapport au volant (1), et le plan de volant (14) horizontal, par rapport au volant (1), se situe entre 105 et 110 mm.
